# EUROPEAN PATENT APPLICATION

(11) **EP 1 416 712 A2**
(43) Date of publication of application: **06.05.2004**
(21) Application number: 03007805.9
(22) Date of filing: 04.04.2003
(51) Int. Cl.: H04N 1/21

(54) **Image storage device**

(30) Priority: 07.10.2002 US 266071
(71) Applicant: Hewlett-Packard Development Company, L.P., Houston, Texas 77070 (US)
(72) Inventor: Youden, John J., San Jose, California 95129 (US)
(74) Representative: Schoppe, Fritz, Dipl.-Ing.

(57) **Abstract**

An image storage device (100) includes a first memory system (124) configured to read images from a first image storage medium (128) and includes a second memory system (122) configured to write the images to a second image storage medium (126). An application (108) detects the first image storage medium (128) and the second image storage medium (126) and initiates the first memory system (124) to read one or more images from the first image storage medium (128), and initiates the second memory system (122) to write the one or more images to the second image storage medium (126).

## Description

### BACKGROUND

This invention relates to data storage and, in particular, to an image storage device.

A digital camera captures photographs and generates photographic image data which is typically stored on a removable flash memory component in the camera. However, conventional flash memory components are limited in the amount of photographic image data (e.g., photographs) that can be stored at any one time. An individual on vacation, for example, can only obtain a limited number of photographs because of the flash memory component storage limitations.

To obtain additional photographs after utilizing the full capacity of the flash memory component in the camera, an individual can purchase additional flash memory components which are expensive, or copy the photographic image data from the camera to a laptop computer. However, an individual may not desire to carry around a laptop computer while on vacation or while taking photographs. Further, the memory in a laptop computer is susceptible to shock and/or the elements which may result in lost data and lost photographs. Computers that are implemented to store photographs also typically require additional photo-editing and managing software.

Accordingly, there is a need for an improved image storage device, such as for the storage of photographic image data.

### SUMMARY

An image storage device includes a first memory system configured to read images from a first image storage medium. The storage device includes a second memory system configured to write the images to a second image storage medium. The device makes use of an application configured to detect at least one of the first image storage medium and the second image storage medium and to initiate the first memory system to read one or more images from the first image storage medium. The application also initiates the second memory system to write the one or more images to the second image storage medium if both the first image storage medium and the second image storage medium are detected.

### BRIEF DESCRIPTION OF THE DRAWINGS

The same numbers are used throughout the drawings to reference like features and components.

Fig. 1 illustrates various components of an exemplary image storage device.

Fig. 2 illustrates an exemplary implementation of a photograph storage appliance implemented with various components of the image storage device shown in Fig. 1.

Fig. 3 illustrates an exemplary implementation of an electronic photograph album implemented with various components of the image storage device shown in Fig. 1.

Fig. 4 is a flow diagram that illustrates a method for an image storage device.

### DETAILED DESCRIPTION

An image storage device is described in one implementation as a photograph storage appliance that copies photographic image data from a first image storage medium, such as a flash memory, to a second image storage medium, such as a rewriteable compact disc or other removable disc format. The photographic image data is generated with a digital camera or a combination still photo and video camera, for example, and maintained with a flash memory component in the camera. When the flash memory is removed from the camera and installed into the photograph storage appliance, the photographic image data is copied to the removable disc for storage and safekeeping.

In another image storage device implementation, an electronic photograph album includes an integrated display device to display photographs corresponding to the photographic image data. A flash memory and/or removable disc is installed into the electronic photograph album and the photographic image data is rendered on the display device as one or more photographs. The photographs can be viewed, edited, deleted, selected for copy, and/or communicated to a printing device.

An image storage device, such as the photograph storage appliance and the electronic photograph album, provides that photographs obtained with a digital camera are quickly and easily archived from a flash memory component to readily portable and inexpensive recordable and/or rewriteable compact disc media, or to another removable disc format. For example, a rewriteable compact disc (CD-RW) can maintain 650 MB to 700 MB of data, whereas flash memory components are designed to maintain only 64 MB or 128 MB of data, and are significantly more expensive than CD-RWs. Further, the photographs can be wirelessly communicated from the image storage device to a printing device, and can be viewed, edited, and managed with the electronic photograph album having an integrated display device.

### Exemplary Image Storage Devices

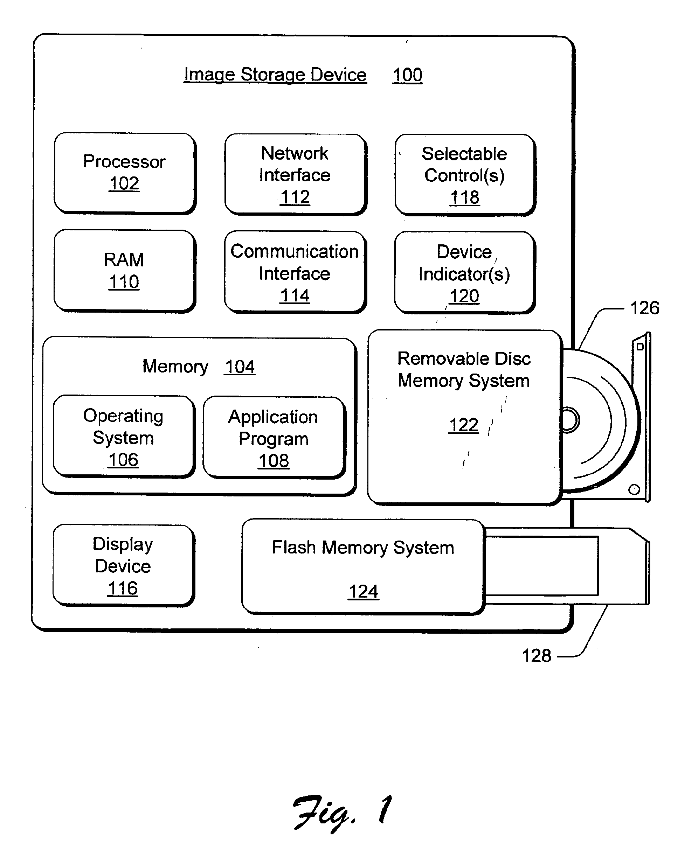

Fig. 1 illustrates various components of an exemplary image storage device 100 that is an appliance device in which image storage can be implemented. Image storage device 100 includes components to facilitate copying and storing photographic images from one memory system to another to maintain, or archive, the photographic images.

Image storage device 100 includes a processor 102 (e.g., a microprocessor) and a memory component 104, such as a flash memory device, read-only memory (ROM), or electrically erasable programmable read-only memory (ROM). Processor 102 processes various instructions to control the operation of image storage device 100 and to communicate with other electronic and computing devices. The memory component 104 maintains an operating system 106 and an application program 108.

The operating system 106 can be implemented as an embedded operating system and executed on processor 102 to provide a runtime environment for the image storage device 100. A runtime environment facilitates extensibility of the image storage device 100 by allowing various interfaces to be defined that, in turn, allow application program 108 to interact with image storage device 100. In an example implementation, operating system 106 can be implemented with a Linux operating system designed for the image storage device 100. For an appliance device such as image storage device 100, a Linux operating system offers PC file system support with a reduced amount of program code.

The application program 108 can be executed on processor 102 and implemented as a software component configured to perform several functions of the image storage device 100. Although application program 108 is illustrated and described as a single application configured to perform several functions, the application program 108 can be implemented as several component applications distributed to each perform one or more functions in the image storage device 100 and/or in an image storage system.

Image storage device 100 may also include a random access memory (RAM) 110 for data and information storage. Image storage device may also include a firmware component (not shown) that is implemented as a permanent memory module stored on memory component 104, implemented as a component of processor 102, or implemented with other components in image storage device 100. Although shown separately, some of the components of image storage device 100 may be implemented in an application specific integrated circuit (ASIC). Additionally, a system bus (not shown) typically connects the various components within image storage device 100.

Image storage device 100 also optionally includes a network interface 112 and/or a communication interface 114. Network interface 112 provides a connection between image storage device 100 and a network, such as an intranet or the Internet. Network interface 112 allows for updating operating system 106 and/or application program 108 with update information received from a data provider connected to the network.

Communication interface 114 can be implemented as a serial and/or parallel interface, as a universal serial bus (USB) interface, as a wireless interface, and/or as any other type of communication interface. A wireless interface enables image storage device 100 to wirelessly communicate image data to a printing device, for example, over an infrared (IR), 802.11, Bluetooth, or similar RF communication link. A serial and/or parallel interface enables image storage device 100 to interact and communicate with other electronic and computing devices via various communication links, and can provide a data communication path directly between image storage device 100 and a printing device.

Image storage device 100 may also include a display device 116 to display images, such as photographs or photographic images, for example. Display device 116 can be implemented as a graphical display that provides information regarding the status of image storage device 100 and the current options available to a user through a menu structure. Display device 116 can also be implemented as an integrated touch-screen display.

Image storage device 100 includes one or more selectable controls 118 and one or more device indicators 120. The selectable controls 118 and device indicators 120 can include push-buttons, switches, status indicators, and/or other selectable controls that can be manipulated by a user of the image storage device 100. Although not shown, image storage device can include an internal battery to power the components and operation of the image storage device and/or may include an external plug-in transformer and power supply.

Image storage device 100 also includes a removable disc memory system 122 and a flash memory system 124. Removable disc memory system 122 can be implemented as a recordable compact disc system drive (CD-R) and/or as a rewriteable compact disc system drive (CD-RW) that writes image data to a compact disc 126 and reads image data from compact disc 126. Additionally, removable disc memory system 122 can be implemented with other removable disc media standards such as a digital versatile disc (DVD), a DVD-R, a DVD-R/W, a DVD+R/W, a DVD-RAM, or any number of other media standards, formats, and density capacities. Flash memory system 124 can be implemented with a flash memory reader to read image data from a flash memory 128, such as a flash memory card, a flash memory stick, and similar flash memory components. In the implementations described herein, flash memory 128 maintains photographic image data obtained with a digital camera which is copied to a removable disc 126 for storage and/or for archive purposes.

General reference is made herein to image storage device 100 and, although specific examples refer to a photograph storage appliance and an electronic photograph album having particular functionalities, such examples are not meant to limit the scope of the claims or the description, but are meant to provide a specific understanding of the described implementations. Furthermore, the described components of image storage device 100 and the appliance devices are merely exemplary, and are not intended to limit application of the claimed subject matter to devices that include only these components. Accordingly, other devices having components different from and/or in addition to those described herein can be used in implementing the described techniques and systems.

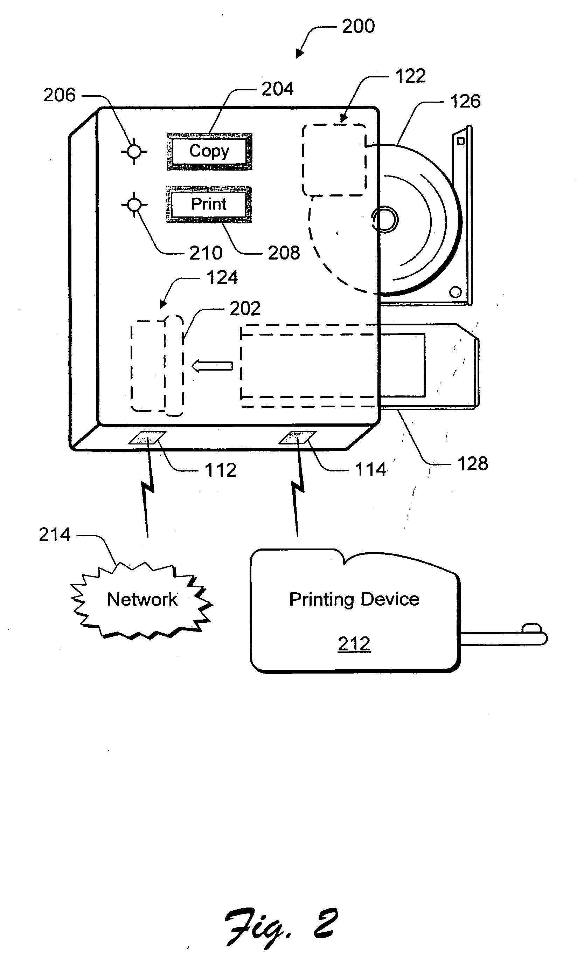

Fig. 2 illustrates an exemplary photograph storage appliance 200 which includes one or more of the components of the exemplary image storage device 100 (Fig. 1). Photograph storage appliance 200 includes the removable disc memory system 122 and the flash memory system 124. A universal flash memory connector 202 accommodates various flash memory components to interface the flash memory system 124 with flash memory 128.

Photograph storage appliance 200 includes a copy selectable control 204 with an associated copy indicator 206, and includes a print selectable control 208 with an associated print indicator 210. When a user selects the copy selectable control 204, photographic image data captured with a digital camera and maintained with flash memory 128 is copied from the flash memory 128 to removable disc 126 for storage. The associated copy indicator 206 illuminates to indicate that the photographic image data is being copied and/or has been copied from the flash memory 128 to the removable disc 126.

When a user selects the print selectable control 208, the photographic image data maintained with flash memory 128 is communicated from the photograph storage appliance 200 to printing device 212 via communication interface 114. Alternatively, print selectable control 208 can initiate communicating photographic image data maintained with removable disc 126 from the photograph storage appliance 200 to printing device 212. In this example, the photographic image data is wirelessly communicated to printing device 212 via a wireless communication interface 114. The associated print indicator 210 illuminates to indicate that the photographic image data is being communicated to the printing device 212.

Although not shown, photograph storage appliance 200 may also include any number of other selectable controls, such as a delete selectable control to initiate deleting photographic image data from the flash memory 128 and/or the compact disc 126. Additionally, photograph storage appliance 200 may include a system update selectable control to initiate updating the embedded operating system 106 (Fig. 1) and/or application program 108 with update information received from a network 214 via network interface 112. The photograph storage appliance 200 and printing device 212 can also include network communication cards that facilitate communication and photographic image data transfer via network interface 112 and communication interface 114.

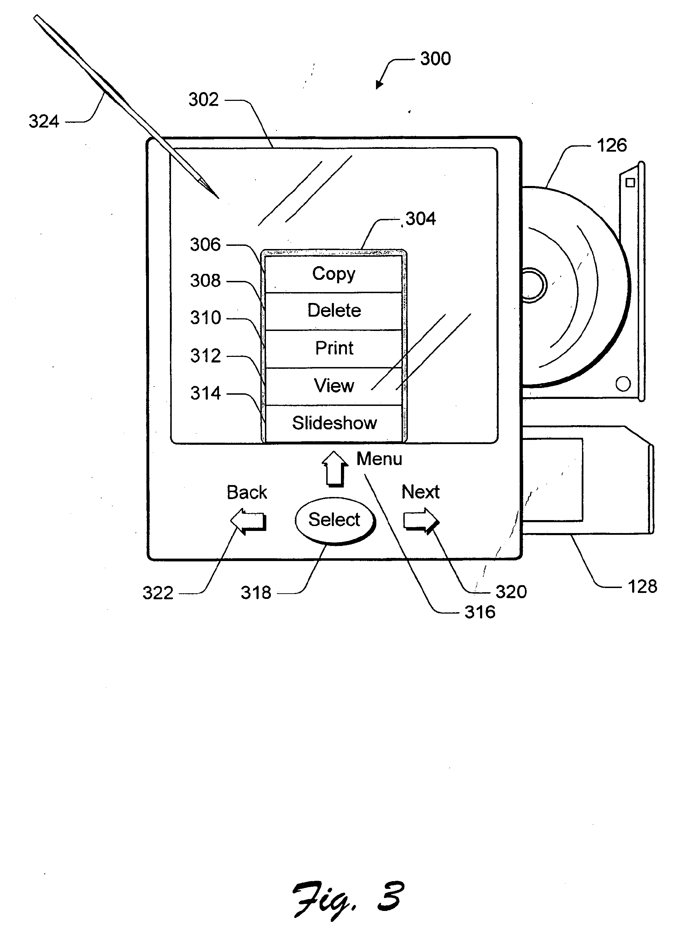

Fig. 3 illustrates an exemplary electronic photograph album 300 which includes one or more of the components of the exemplary image storage device 100 (Fig. 1). Electronic photograph album 300 includes the removable disc memory system 122 (not shown) to read photographic image data from removable disc 126 and write photographic image data to removable disc 126. Electronic photograph album 300 also includes the flash memory system 124 (not shown) to read photographic image data from flash memory 128.

The electronic photograph album 300 has an integrated display device 302 that displays photographs, or photographic images generated for display from photographic image data stored on removable disc 126 and/or flash memory 128. The display device 302 also renders a menu 304 of selectable controls 306 through 314. A selectable menu control 316 initiates displaying the menu 304 on display device 302 and/or scrolling through selectable controls 306 through 314. A select control 318 can be selected to choose one of the selectable controls 306 through 314.

A selectable copy control 306 can be selected with the select control 318 to initiate copying photographic image data maintained with flash memory 128 to removable disc 126 for storage. A selectable delete control 308 initiates deleting photographic image data from flash memory 128 and/or removable disc 126, such as a rewriteable compact disc. A selectable print control 310 initiates that photographic image data maintained with flash memory 128 and/or compact disc 126 is communicated from the electronic photograph album 300 to a printing device. A selectable view control 312 initiates displaying a photograph represented by photographic image data on display device 302. A selectable next control 320 and a selectable back control 322 are selected to display a next photograph on display device 302 or display a previous photograph, respectively. A selectable slideshow control 314 initiates a consecutive display of photographs on display device 302.

The display device 302 can also be implemented as a touch-screen display and the selectable controls 306 through 314 can alternatively be selected with a pointing device 324. In addition, any number of other selectable controls may be included in menu 304 and/or any other combination of selectable controls 306 through 314 can be implemented as menu 304.

Electronic photograph album 300 includes processor 102 and application program 108 (as depicted in Fig. 1) which is executed on the processor to perform operations and functions of the electronic photograph album. For example, application program 108 can be implemented to detect the installation of flash memory 128, recognize that removable disc 126 is installed, and initiate copying photographic image data from the flash memory 128 to the removable disc 126. Alternatively, or in addition, application program 108 can detect or recognize that only flash memory 128 or a removable disc 126 is installed in the electronic photograph album 300 and initiate displaying one or more photographs on display device 302: Although not shown, electronic photograph album 300 may include an on/off selectable control that, when selected, initiates application program 108 to detect the photographic image memory devices and copy and/or display corresponding photographs.

### Methods for an Image Storage Device

Methods for an image storage device may be described in the general context of computer-executable instructions located in computer storage media, including memory storage devices. Generally, computer-executable instructions include routines, programs, objects, components, data structures, and the like that perform particular functions or implement particular abstract data types.

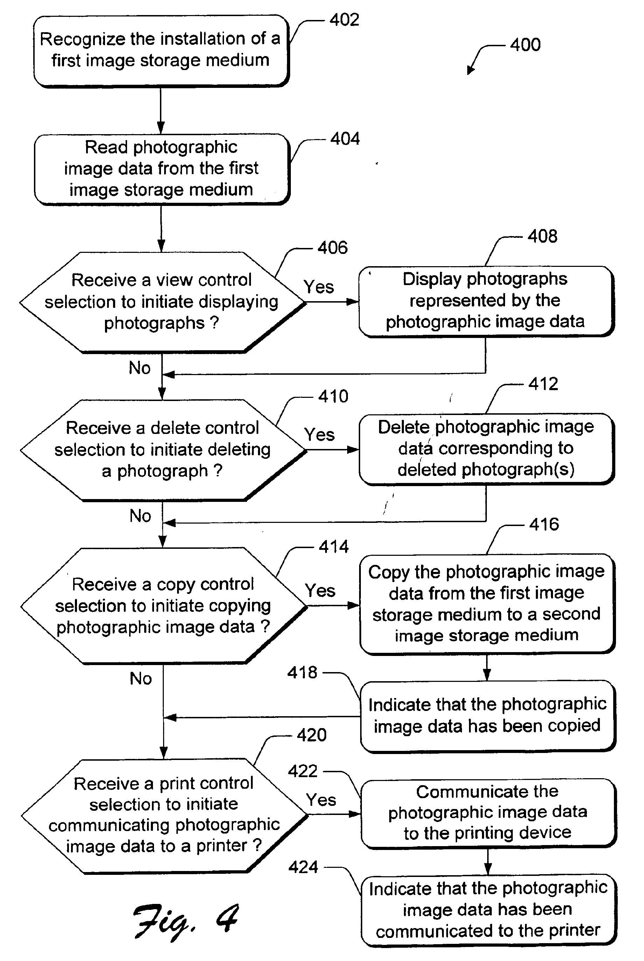

Fig. 4 illustrates a method 400 for an image storage device. The order in which the method is described is not intended to be construed as a limitation, and any number of the described method blocks can be combined in any order to implement the method. Furthermore, the method can be implemented in any suitable hardware, software, firmware, or combination thereof.

At block 402, the installation of a first image storage medium is recognized. For example, application program 108 (Fig. 1) recognizes, or otherwise detects, that flash memory 128 is installed into image storage device 100 (or into either of the photograph storage appliance 200 and electronic photograph album 300). Additionally, application program 108 can be implemented to recognize when removable disc 126 is installed into image storage device 100.

At block 404, photographic image data is read from the first image storage medium when the installation of the first image storage medium is recognized. For example, application program 108 initiates that flash memory system 124 read photographic image data from flash memory 128. Additionally, application program 108 can be implemented to initiate that removable disc memory system 122 read photographic image data from removable disc 126.

At block 406, a view control selection is received to initiate displaying the photographic image data on an integrated display device, and at block 408, the photographic image data is displayed on the display device. For example, selectable view control 312 (Fig. 3) is selected with select control 318 or with pointing device 324 and one or more photographs represented by the photographic image data maintained with flash memory 128 or removable disc 126 are displayed on display device 302.

At block 410, a delete control selection is received to initiate deleting photographic image data representing a photograph from the first image storage medium, and at block 412, the photographic image data corresponding to the identified photograph is deleted. For example, selectable delete control 308 (Fig. 3) is selected with select control 318 or with pointing device 324 to identify a photograph that will be deleted from the flash memory 128 or removable disc 126 and/or to identify a photograph that will not be copied from the flash memory 128 to the removable disc 126.

At block 414, a copy control selection is received to initiate copying a photograph represented by the photographic image data from the first image storage medium to a second image storage medium. At block 416, the photographic image data is copied from the first image storage medium to the second image storage medium. For example, selectable copy control 306 (Fig. 3) is selected with select control 318 or with pointing device 324 to initiate copying the photographic image data representing one or more photographs from flash memory 128 to removable disc 126.

Alternatively, selectable copy control 204 (Fig. 2) is selected to initiate copying the photographic image data with the components of photograph storage appliance 200. Copying the photographic image data to removable disc 126 includes writing the photographic image data to a digital versatile disc or to a recordable or rewriteable compact disc. Copying the photographic image data may also include reading the photographic image data from flash memory 128 and writing the photographic image data to RAM 110 (Fig. 1), or to another memory component of image storage device 100 (or either of the photograph storage appliance 200 and electronic photograph album 300).

At block 418, it is indicated that the photographic image data has been copied from the first image storage medium to the second image storage medium. For example, copy indicator 206 (Fig. 2) illuminates to indicate that the photographic image data is being copied and/or has been copied from flash memory 128 to removable disc 126. Although not shown, a copy indication may also be rendered on display device 302 (Fig. 3) to indicate copying photographic image data with electronic photograph album 300. For example, the selectable copy control 306 may be hi-lighted with shading, a color, a border, or similar discernable indication that the photographic image data is being copied and/or has been copied.

At block 420, a print control selection is received to initiate communicating the photographic image data to a printing device, and at block 422, the photographic image data is communicated to the printing device. For example, selectable print control 310 (Fig. 3) is selected with select control 318 or with pointing device 324 to initiate communicating photographic image data to a printing device. Alternatively, selectable print control 208 (Fig. 2) is selected to initiate communicating photographic image data from photograph storage appliance 200 to printing device 212 via communication interface 114. Communicating the photographic image data to a printing device includes wirelessly communicating the photographic image data to the printing device.

At block 424, it is indicated that the photographic image data has been communicated to a printing device. For example, print indicator 210 (Fig. 2) illuminates to indicate that the photographic image data is being communicated to printing device 212. Although not shown, a print indication may also be rendered on display device 302 (Fig. 3) to indicate communicating the photographic image data from electronic photograph album 300 to a printing device. For example, the selectable print control 310 may be hi-lighted with shading, a color, a border, or similar discernable indication that the photographic image data is being communicated and/or has been communicated to a printing device.

### Conclusion

Although the invention has been described in language specific to structural features and/or methods, it is to be understood that the invention defined in the appended claims is not necessarily limited to the specific features or methods described. Rather, the specific features and methods are disclosed as preferred forms of implementing the claimed invention.

## Claims

1. An image storage device (100), comprising:
a first memory system (124) configured to read images from a first image storage medium (128);
a second memory system (122) configured to write the images to a second image storage medium (126);
an application (108) configured to:
detect at least one of the first image storage medium (128) and the second image storage medium (126); and
initiate the first memory system (124) to read one or more images from the first image storage medium (128), and initiate the second memory system (122) to write the one or more images to the second image storage medium (126) if both the first image storage medium (128) and the second image storage medium (126) are detected.

2. An image storage device (100) as recited in claim 1, wherein the first memory system (124) includes a flash memory (128) reader and a universal flash memory interface (202), and wherein the second memory system (122) includes a removable disc (126) system.

3. An image storage device (100) as recited in claim 1, further comprising a communication interface (114) configured to communicate the one or more images to a printing device (212).

4. A photograph storage appliance (300), comprising:
a flash memory system (124) configured to read photographic image data from a flash memory (128);
an application (108) configured to detect the installation of the flash memory (128) into the photograph storage appliance (300), and initiate the flash memory system (124) to read the photographic image data from the flash memory (128); and
a removable disc system (122) configured to write the photographic image data to a removable disc (126).

5. A photograph storage appliance (300) as recited in claim 4, further comprising a communication interface (114) configured to communicate the photographic image data to a printing device (212).

6. A photograph storage appliance (300) as recited in claim 4, further comprising a display device (302) configured to display the photographic image data.

7. A method (400), comprising:
recognizing (402) that a first image storage medium (128) is installed;
reading (404) photographic image data from the first image storage medium (128) when recognizing (402) that the first image storage medium (128) is installed; and
copying (416) the photographic image data to a second image storage medium (126).

8. A method (400) as recited in claim 7, wherein recognizing (402) includes detecting that a flash memory (128) is installed, and wherein copying (416) includes writing the photographic image data to a removable disc (126).

9. A method (400) as recited in claim 7, further comprising communicating (422) the photographic image data to a printing device (212).

10. A method (400) as recited in claim 7, further comprising displaying (408) the photographic image data on an integrated display device (302).
